# EUROPÄISCHE PATENTANMELDUNG

(11) **EP 0 806 273 A2**
(43) Veröffentlichungstag der Anmeldung: **12.11.1997**
(21) Anmeldenummer: 97107443.0
(22) Anmeldetag: 06.05.1997
(51) Int. Cl.: B29C 45/14, B29C 45/04, B29C 45/28

(54) **Verfahren zur Herstellung von Spritzgussteilen sowie Vorrichtung hierfür**

(30) Priorität: 07.05.1996 DE 19618281
(71) Anmelder: Kessler, Reinhard, Dipl.-Ing, 97525 Schwebheim (DE)
(72) Erfinder: Kessler, Reinhard, Dipl.-Ing, 97525 Schwebheim (DE)
(74) Vertreter: Schwabe, Hans-Georg, Dipl.-Ing.

(57) **Zusammenfassung**

Die Erfindung betrifft ein Verfahren zur Herstellung von Spritzgußteilen, insbesondere Flaschenstöpseln, aus wenigstens einem thermoplastischen Kunststoff, vorzugsweise mit Treibgas, wobei ein Kunststoffmaterial in eine Spritzform eingeleitet wird, wobei eine Folie in die Spritzform eingesetzt wird, wobei erfindungsgemäß wenigstens zwei Sätze von unterteilten Spritzformen (12a,12b,12c) endlos umgeführt werden, so daß in einem vorgegebenen Bereich von deren jeweiligen Umlaufbahnen wenigstens eine jeweilige unterteilte Spritzgußform eines Satzes mit einer jeweiligen unterteilten Spritzgußform eines anderen Satzes zu einer im wesentlichen geschlossenen Spritzgußform (12b) zusammengeführt wird, wobei die Folie (30) zwischen die sich schließenden bzw. geschlossenen Spritzgußformen im wesentlichen in Bewegungsrichtung der im wesentlichen geschlossenen Spritzgußform (12b) eingeführt wird.

## Beschreibung

Die Erfindung betrifft ein Verfahren zur Herstellung von Spritzgußteilen gemäß dem Oberbegriff des Patentanspruchs 1 sowie eine Vorrichtung zur Herstellung von Spritzgußteilen gemäß dem Oberbegriff des Patentanspruchs 6.

Spritzgußteile werden gegenwärtig in Spritzformen hergestellt, wobei über eine Düse, insbesondere eine Nadelverschlußdüse ein Kunststoffmaterial in die Spritzform eingespritzt wird. In Abhängigkeit von der Form des letztlich gewünschten Spritzgußteils kann beispielsweise auch ein Schlauch in eine Spritzgußform eingeführt und anschließend aufgeblasen werden. Diesbezüglich gibt es die verschiedensten Anwendungen, beispielsweise zur Herstellung von Kunststoff-Kraftfahrzeugtanks, von Reinigungsmittel- bzw. Nahrungsmittelbehältern aus Kunststoff, von Vollkörpern, wie etwa Korken aus Kunststoff, Spielzeuge aus Kunststoff und andere Gegenstände aus Vollmaterial oder mit Ausnehmungen für verschiedenste Zwecke. Dabei können diese diversen Gegenstände sowohl aus Kunststoffen mit oder ohne Schäumungsmittel hergestellt werden. All diesen Bereichen widmet sich die vorliegende Erfindung.

Insbesondere ist die vorliegende Erfindung auf ein Verfahren zur Herstellung von Kunststoffkorken aus Kunststoff mit Treibmitteln gerichtet. Dabei sind Verfahren und Vorrichtungen bekannt, bei denen in eine Spritzform mit einem mit einem Treibmittel versetzten Kunststoff über eine Nadelverschlußdüse ausgeschäumt wird, bis die gesamte Form massiv mit Kunststoff ausgeschäumt ist. Anschließend wird der Korkenverschluß aus Kunststoff abgekühlt und später aus der Spritzform entnommen. Dabei wird, wie unter anderem auch der DE 42 25 092 C2 zu entnehmen ist, eine gasundurchlässige Folie in das Vollmaterial auch aus Kunststoff mit Aufschäumungsmitteln eingebracht, um bevorzugt für Weine eine Oxidationsbarriere zu schaffen. Dabei wird eine Hälfte des Korkens an die Folie angespritzt, das Halbzeug relativ zu der Spritzgußform gedreht und dann zum fertigen Kunststoffkorken vollendet. Diese Fertigungsweise erfordert Zeit und es entstehen Fertigungstoleranzen, die die Qualität und die Eigenschaften der Korken negativ beeinflussen.

Korken aus Kunststoff haben gegenüber natürlichen Korken aus Kork der Korkeiche den erheblichen Vorteil, daß sie geschmacksneutral sind und auch über eine lange Zeitdauer hinweg weder durch Bakterien noch durch Insekten (Korkmotte) oder durch Feuchtigkeit, Weinsäure oder dergleichen beeinflußbar sind.

Die oben aufgeführte Herstellungsweise für Spritzgußteile, beispielsweise Flaschenstöpsel, aber auch andere massive oder mit Höhlungen bzw. Ausnehmungen versehene Spritzgußteile hat darüber hinaus den ganz erheblichen Nachteil, daß eine Massenfertigung aufgrund der zu erzielenden Taktzeiten in ökonomischer Weise nicht durchführbar ist bzw. nur in Ausnahmen vertretbar ist.

Es ist die Aufgabe gemäß der vorliegenden Erfindung, ein Verfahren zur Herstellung von Spritzgußteilen, insbesondere Flaschenstöpseln, sowie eine Vorrichtung zur Herstellung von Spritzgußteilen vorzuschlagen, mit denen die oben in bezug auf den Stand der Technik erörterten Nachteile soweit als möglich ausgeräumt werden können; insbesondere ist es eine Aufgabe gemäß der vorliegenden Erfindung, ein Verfahren und eine Vorrichtung zur Herstellung von Spritzgußteilen zur Verfügung zu stellen, mit denen große Stuckzahlen ökonomisch gefertigt werden können.

Diese Aufgabe wird durch ein Verfahren bzw. durch eine Vorrichtung mit den in den unabhängigen Ansprüchen aufgeführten Schritten bzw. Merkmalen gelöst.

Vorteilhafte Verfahrensvarianten bzw. Ausführungsformen werden durch die jeweiligen Unteransprüche definiert.

Die gemäß der vorliegenden Erfindung zu erzielenden Vorteile beruhen darauf, daß wenigstens zwei Sätze von unterteilten Spritzformen endlos umgeführt werden, so daß in einem vorgebbaren Bereich von deren jeweiligen Umlaufbahnen wenigstens eine jeweilige unterteilte Spritzform eines Satzes mit einer jeweiligen unterteilten Spritzform eines anderen Satzes zu einer im wesentlichen geschlossenen Spritzform zusammengeführt wird, wobei ein Träger, insbesondere eine Folie bzw. ein Band, zwischen die sich schließenden bzw. geschlossenen Spritzformen im wesentlichen in Bewegungsrichtung der im wesentlichen geschlossen Spritzform eingeführt wird.

Dabei kann der Träger bzw. die Folie bzw. das Band je nach Art der Unterteilung der Spritzform später mittig im Spritzgußteil zu liegen kommen. Natürlich ist es auch möglich, das Band bzw. die Folie außermittig in die Spritzgußform einzubringen. Wird für den Kunststoff ein im wesentlichen sauerstoffdichter Kunststoff verwendet, so kann ein Band verwendet werden, um die Spritzgußteile bzw. Flaschenstöpsel aus den Spritzgußformen bzw. Halbkokillen am Ende einer Fertigungslinie aus Spritzformhälften zweier Sätze endlos umlaufender Teile von Spritzformen auszutragen. Wird ein sauerstoffdurchlässiger Kunststoff verwendet, um die Flaschenstöpsel zu fertigen, so wird in das Material des Flaschenstöpsels eine sauerstoffündurchlässige Folie eingebracht.

In dem Falle, daß Spritzgußteile mit einer anderen Bestimmung hergestellt werden, können diese beispielsweise auch über gegebenenfalls induktiv, pneumatisch, hydraulisch oder sonstwie betriebene Ausstoßeinrichtung, beispielsweise Ausstoßkolben, aus den geöffneten Spritzgußformen bzw. Kokillenhälften ausgestoßen werden.

Die erfindungsgemäße Verfahrensweise hat klar den Vorteil, daß eine Massenfertigung ermöglicht wird.

Vorteilhafterweise sind die jeweiligen Spritzformen im wesentlichen hälftig geteilt und der Träger, die Folie bzw. das Band wird in die Spritzform eingefädelt, bevor diese geschlossen wird, und teilt bzw. durchzieht das fertige Produkt, insbesondere Flaschenstöpsel im wesentlichen mittig.

Im Extremfalle wäre es prinzipiell auch denkbar, eine Teilkokille als die andere Teilkokille bzw. das andere Spritzformteil verschließenden Deckel bzw. verschließende Platte auszubilden, wobei die Folie bzw. das Band den Boden bzw. den oberen Abschnitt des späteren Spritzgußteils bildet.

Vorteilhafterweise wird wenigstens eine Düseneinrichtung, bevorzugt zwei Düseneinrichtungen, an die im wesentlichen geschlossene Spritzform bzw. die jeweiligen geschlossenen Spritzformen angesetzt, um die Spritzform, in der die Folie bzw. das Band abschnittweise aufgenommen ist, mit Kunststoff, bevorzugt mit einem mit einem Treibmittel versehenen Kunststoff, zu füllen.

Um die Spritzformen bzw. die geschlossenen Kokillen während und unmittelbar nach dem Spritzgußvorgang zu schließen, werden die Spritzdüsen relativ zu der geschlossenen Spritzform bewegt, um die Düsenöffnungen von den den Spritzdüsen zugeordneten Anschlußöffnungen bzw. -kanälen der Spritzform zu trennen. Hierbei wäre es von Vorteil, wenn die Spritzdüse bzw. -düsen im von der Spritzform getrennten Zustand die Spritzform wenigstens im wesentlichen verschließen. In diesem Zustand wäre es von Vorteil, wenn auch die Spritzdüse bzw. -düsen selbst automatisch schließbar wären. Dies läßt sich besonders vorteilhaft dadurch erzielen, daß sowohl die Spritzdüse oder -düsen als auch die mit diesen in Wirkverbindung tretenden Abschnitte der Spritzform bzw. Halbkokillen Flächen aufweisen, so daß bei einer relativen Bewegung der Spritzdüse(n) relativ zu den Einspritzöffnungen bzw. -kanälen der Spritzform die jeweiligen Verschlußflächen den jeweils zugeordneten Öffnungen der Düsen bzw. Kanäle gegenüberzulegen kommen und diese damit automatisch verschließen.

Gemäß der Erfindung kann ein Heißkanalsystem verwendet werden, wie es vom Prinzip her dem Fachmann bekannt ist, und hier nicht näher erörtert werden muß.

Der Abstand, der zwischen den Spritzdüsen des Spritzkopfes und den korrespondierenden Kanälen der Spritzform besteht, ist minimal und liegt bei wenigen hundertstel mm, bevorzugt bei weniger als 5/100 mm, insbesondere bei 1/100 mm.

Es ist natürlich möglich, auch andere Arten von Verschlußmechanismen im Stand der Technik zu verwenden. Es hat sich jedoch gezeigt, daß die obige Ausführungsform und deren Spielarten besonders vorteilhaft sind, wenn Kunststoffe mit Treibgas verarbeitet werden, die ansonsten, beispielsweise im Falle von Nadelverschlußdüsen, aus dem Korrugator bzw. den Spritzdüsen quellen würden.

Eine bevorzugte Verfahrensvariante umfaßt den Schritt, daß die Spritzgußteile, bevorzugt Flaschenstöpsel, an dem Träger bzw. der Folie gehalten, aus den sich öffnenden Spritzformen herausbefördert werden. Hierdurch wird eine verfahrenstechnisch besonders einfache und wirksame Methode ermöglicht, um die Spritzgußteile aus den sich öffnenden Halbkokillen bzw. Spritzformhälften auszutragen, ohne daß hierfür gesonderte Ausstoßmechanismen in den Spritzformteilen bzw. Halbkokillen erforderlich sind.

Dabei können das Band bzw. die Folie mit Schwächungsstellen versehen werden, so daß sich die fertigen Spritzgußteile leichter vom Band bzw. der Folie trennen lassen. Andererseits ist es auch möglich, die Spritzgußteile auch direkt aus der Folie zu stanzen, ohne daß Schwächungsstellen vorgesehen sind.

Zur Erhöhung des Ausstoßes des Verfahrens gemäß der vorliegenden Erfindung ist es zweckmäßig, eine größere Anzahl von Spritzgußformen bzw. Kokillen zu einer Zeit zu schließen. Gegebenenfalls können auch mehrere Spritzgußformen bzw. Kokillen gleichzeitig mit mehreren Spritzdüsen bzw. Spritzköpfen mit beispielsweise warmplastischem Kunststoff gefüllt werden, wobei in einem Takt ein Vorschub von zwei, drei oder mehr geschlossenen Spritzgußformen bzw. Kokillen vorgenommen werden kann. Die Spritzgußteile können nach ihrer Ausschäumung bzw. Erzeugung innerhalb der Kokillen zeitweise gewärmt und/oder gekühlt werden, um ein übermäßiges Schrumpfen durch übermäßig schnelles Abkühlen bzw. ein ausreichend schnelles Abkühlen zur Sicherstellung eines ausreichenden Durchsatzes zur Verfügung zu stellen. Die Folie, die in die noch geöffneten Halbkokillen bzw. Spritzformteile eingeführt wird, kann aus Metall und/oder Kunststoff hergestellt sein, um als Gasbarriere verwendet zu werden.

Die Spritzgußformenhälften bzw. Halbkokillen können in einer ununterbrochenen Folge endlos umgeführt werden, oder können entsprechend der dem Fachman bekannten Shuttle-Technik in einer unterbrochenen Folge umgeführt werden, wobei die offenen Halbkokillen schneller bewegt werden, um sie für den nächsten Produktionsschritt verfügbar zu machen. Bei der letzteren Technik kann die Anzahl der Halbkokillen bei gleicher Produktivität reduziert werden, so daß Kosten eingespart werden können.

Gemäß der vorliegenden Erfindung wird die im Prinzip bekannte Korrugatortechnologie im Bereich des Spritzgusses zur Anwendung gebracht, wobei sich dieses insbesondere für die Herstellung von Flaschenstöpseln als vorteilhaft und effektiv erwiesen hat. Zur Korrugatortechnologie brauchen im Prinzip keine besonderen Ausführungen gemacht zu werden, da diese dem Fachmann durchweg geläufig ist. Es sei darauf hingewiesen, daß sich das erfindungsgemäße Verfahren zur Herstellung von strukturierten Spritzgußformen auch in Verbindung mit dem dem Fachmann bekannten Überdruck- oder Unterdruckverfahren vorteilhaft zur Anwendung bringen läßt. Gemäß der vorliegenden Erfindung beruhen die Vorteile einer Vorrichtung zum Herstellen von Spritzgußteilen, insbesondere Flaschenstöpseln, darauf, daß wenigstens eine, vorzugsweise zwei Spritzdüsen jeweilige Dichtabschnitte aufweisen, wobei die Spritzdüse(n) relativ zu der bzw. zu den Spritzformanschlußöffnung(en) oder -kanälen bewegbar ist bzw. sind, um die Spritzdüsen und/oder die Spritzformanschlußöffnungen oder -kanäle wenigstens im wesentlichen zu schließen. Hierdurch wird verhindert, daß insbesondere beim Herstellen von Spritzgußteilen aus einem mit Treibmittel versetzten Kunststoff Kunststoff während der Expansionsphase aus den Öffnungen der Kokillen bzw. geschlossenen Spritzgußformen austreten kann.

Bevorzugt weisen die Spritzform und die Spritzdüse ebene Flächen auf, die ggfs. einander unmittelbar zugeordnet sind, so daß durch ein Parallelverschieben der Spritzgußdüse(n) bzw. des Spritzkopfes zu der Spritzform diese und die Spritzdüse(n) im wesentlichen verschlossen werden können.

Bevorzugt weist die Spritzgußform wenigstens zwei Teile, vorzugsweise etwa hälftige Teile, auf. Durch die hälftige Ausgestaltung bedarf es vorteilhafterweise keiner zusätzlichen Steuerung der zuzuführenden Kunststoffmengen. Es ist hier lediglich möglich, eine Zuführung von einem Extruder symmetrisch zu halbieren und in zwei gleiche Kanäle aufzuspalten, die in die jeweiligen Düsen eines Spritzkopfes münden, die an die Anschlußöffnungen bzw. -kanäle der geschlossenen Spritzform bzw. der jeweiligen Hälften der Spritzform anschließbar sind. Wenn ungleichmäßige Volumina bei der Spritzform zu füllen sind, muß der Kunststoff entsprechend portioniert in die Formteile mit jeweilig anderen Volumen eingeführt werden.

Eine besonders vorteilhafte Vorrichtung gemäß der Erfindung ergibt sich, wenn die Vorrichtung zum Herstellen von Spritzgußteilen, insbesondere Flaschenstöpseln, mit mehreren Spritzformen in endlos umlaufenden Formteilketten versehen ist, wobei die Spritzformen jeweilige Einfüllkanäle aufweisen, an die wiederum jeweilige Spritzdüsen eines Spritzkopfes anschließbar sind. Hierbei handelt es sich prinzipiell um einen Korrugator, der für die Spritzgußtechnologie ausgebaut ist. Dabei bilden die Halbkokillen des Korrugators jeweils abgeschlossenen Kammern, in die lediglich über die Einspritzkanäle Material eingeführt werden kann. In Bewegungsrichtung der Halbkokillen bzw. Spritzformhälften ist praktisch kein Zwischenraum vorgesehen. Lediglich für die Durchführung eines Bandes oder einer Folie kann ein nahezu vernachlässigbarer Zwischenraum vorgesehen werden, der jedoch im geschlossenen Zustand der Spritzformhälften bzw. Kokillenhälften wenigstens im wesentlichen durch das Band bzw. die Folie nach außen hin abgeschlossen ist.

Vorteilhafterweise wird vor den Spritzformen, insbesondere denen, die im geschlossenen Zustand sind, eine Zuführeinrichtung angeordnet, um ein Band bzw. eine Folie zuzuführen, die zwischen den Formteilhälften bzw. Kokillenhälften aufgenommen wird.

Entsprechend kann vorteilhafterweise hinter den sich wiederum öffnenden Halbkokillen eine Abführeinrichtung vorgesehen sein, die das auslaufende Band bzw. die auslaufende Folie aufwickelt, um das Band bzw. die Folie dazu zu verwenden, um die Formteile aus der Produktionsstätte herauszubefördern.

Eine Auslöse- bzw. Ausstanzeinrichtung kann ebenfalls unmittelbar hinter der Produktionsstätte bzw. der erfindungsgemäßen Vorrichtung angeordnet sein, um beispielsweise Flaschenstöpsel aus einer Folie herauszustanzen bzw. aus einer mit Schwächungslinien versehenen Folie herauszudrücken.

Wie bereits oben ausgeführt, bilden die Spritzformhälften bzw. Kokillenhälften gemäß der vorliegenden Erfindung im Gegensatz zur üblichen Korrugatortechnologie wenigstens im wesentlichen geschlossene Hohlräume, um die Anwendung der Spritzgußtechnologie zu ermöglichen.

Nachfolgend wird die vorliegende Erfindung anhand von bevorzugten Ausführungsformen bzw. Verfahrensvarianten unter Bezugnahme auf die beigefügten Figuren näher erläutert. Dabei werden weitere Vorteile und Merkmale bzw. Verfahrensschritte gemäß der vorliegenden Erfindung sowie zusätzliche Problemstellungen offenbart. In den Darstellungen zeigen:
- Fig. 1: eine Ausführungsform einer Vorrichtung zur Durchführung des erfindungsgemäßen Verfahrens in einer schematischen Schnittdarstellung;
- Fig. 2: einen Querschnitt durch einen Spritzkopf, der in seiner passiven Stellung an einer geschlossenen Spritzform angeordnet ist; und
- Fig. 3: einen Schnitt durch die Anordnung gemäß Fig. 2 im produktiven Zustand.

In den nachfolgenden Figuren bezeichnen gleiche Bezugszeichen gleiche Teile bzw. wenigstens funktionsgleiche Teile.

Nachfolgend wird die Vorrichtung gemäß der vorliegenden Erfindung als Korrugator bezeichnet, während die Spritzformen bzw. Spritzformhälften als Kokillen bzw. Kokillenhälften bezeichnet werden.

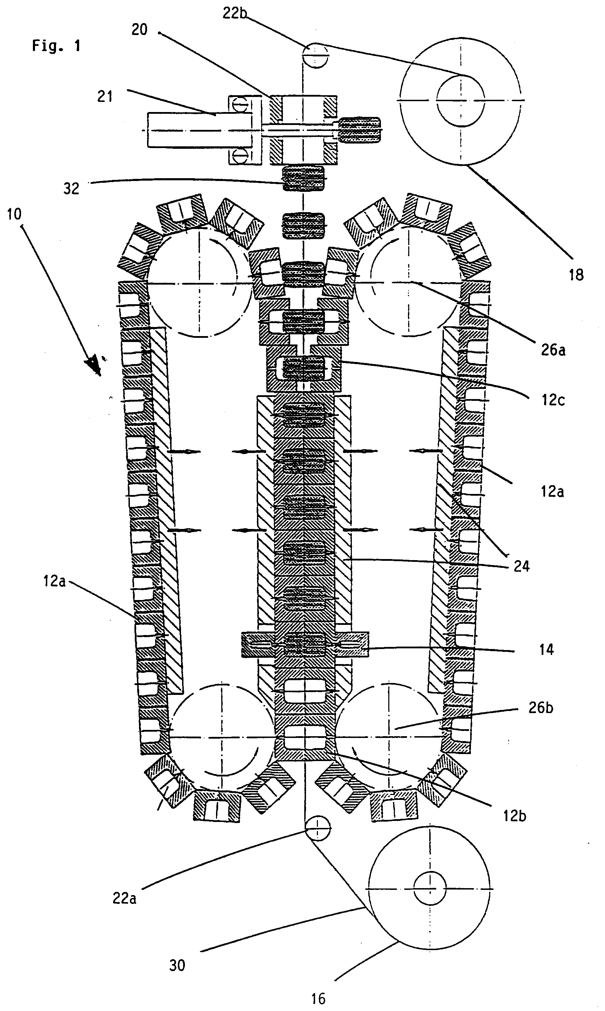

In Fig. 1 ist ein Korrugator 10 dargestellt, der Kokillenhälften 12a, 12b, 12c umfaßt. Die Kokillenhälften 12a bis 12c laufen in einer endlosen Anordnung um jeweilige Umlenkräder 26a, 26b um und werden in einem vorgegebenen Bereich zusammengeführt. Dabei bezeichnet das Bezugszeichen 12a Halbkokillen im geöffneten Zustand und das Bezugszeichen 12b die geschlossenen Kokillen, die für das Einleiten von Kunststoff geschlossen worden sind. Das Bezugszeichen 12c bezeichnet Halbkokillen, die über einen bestimmten Bereich parallel versetzt auseinandergefahren werden, um ein Verkanten der Kokillen gegenüber dem fertigen Spritzgußteil bzw. Flaschenstöpsel 32 zu vermeiden.

An dem vorderen Ende des Korrugators 10 ist eine Träger- bzw. Folien-Bobinenabwickelmaschine 16 vorgesehen, über die eine Folie 30, geführt über eine Umlenkeinrichtung 22a, beispielsweise eine Rolle, zwischen die sich schließenden Halbkokillen 12b eingeführt wird, um während des Spritzgußvorganges in das Spritzgußteil integriert zu werden.

In einem Bereich, in dem die Kokillenhälften 12c zu geschlossenen Kokillen 12 zusammengeführt sind, sorgen Platten 24 dafür, daß die Kokillerhälften aneinandergepreßt werden, wobei den Kokillen Wärme entzogen oder zugeführt werden kann. Die in der Fig. 1 gezeigten Pfeile sollen den Entzug von Wärme andeuten.

Nachdem die Spritzgußteile bzw. Flaschenstöpsel hinreichend abgekühlt und damit formstabil sind, werden die Spritzgußteile 32 unter Zuhilfenahme der Folie 30 aus den sich parallel zueinander auseinanderbewegenden Halbkokillen 12c ausgetragen und über eine Folienaufwickelvorrichtung 18 durch eine Stanzeinrichtung 20 hindurchbefördert, wo über einen Zylinder 21 ein Kolben 20 die Spritzgußteile aus der eventuell mit Schwächungslinien versehenen Folie herausdrückt bzw. herausstanzt. Die Folie kann an den Rändern, die nach dem Ausdrück- bzw. Ausstanzvorgang stehenbleiben, dicker ausgebildet sein, um ein Reißen der Folie 30 vermeiden zu helfen.

Auch am oberen Ende kann eine Umlenkvorrichtung 22b in Form beispielsweise einer Walze oder Rolle vorhanden sein.

Die Folie bzw. der Träger kann durch die sich bewegenden geschlossenen Formteile bzw. Halbkokillen mitbewegt werden oder auch teilweise oder ganz durch die Einrichtungen 16, 18 befördert werden.

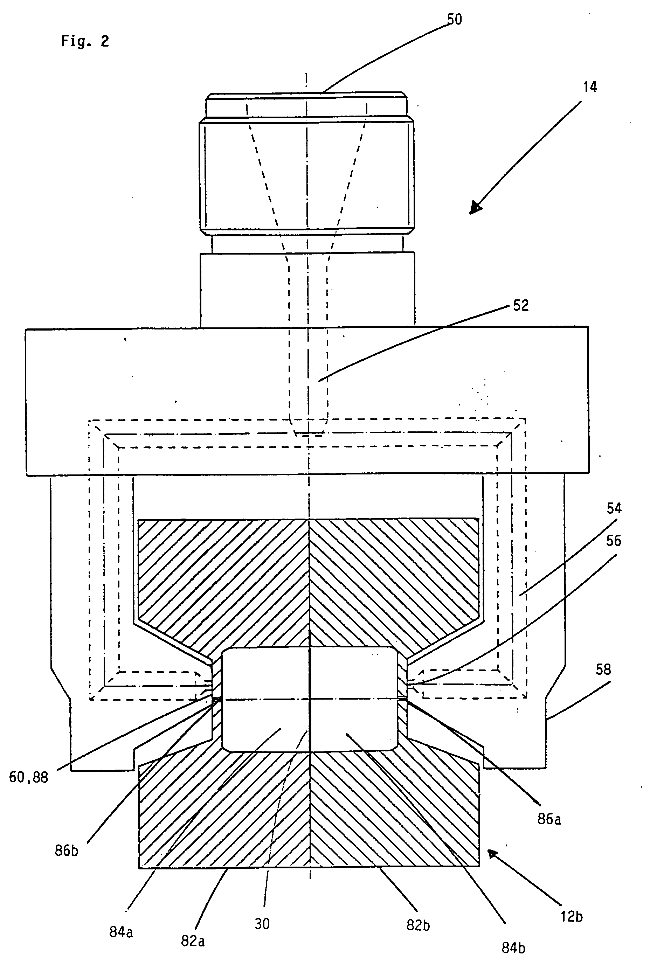

In der Fig. 2 ist eine geschlossene Kokille 12b aus Kokillenhälften 82a, 82b dargestellt, auf die ein Spritzkopf 14 zugreift.

Die Kokillenhälften 82a, 82b weisen jeweilige Einspritzöffnungen bzw. -kanäle 36a, 36b auf, über die in den Hohlraum 84a, 84b ein Kunststoffmaterial, vorzugsweise ein Kunststoffmaterial, das mit Treibmittel versetzt ist, eingespritzt werden kann. Mittig zwischen den Kokillenhälften 82a, 82b ist eine Folie 30 angeordnet bzw. geführt.

Der Spritzkopf 14 weist eine Anschlußöffnung 50 auf, die an einen Extruder anschließbar ist. Daran schließt ein Zuführkanal 52 an, durch den das Extrudat mit oder ohne Treibmittel hindurchgeführt werden kann. Der Zuführkanal 52 wird in zwei symmetrisch ausgebildete Kanäle 54 verzweigt, die in jeweilige Düsen 56 enden. Der Spritzkopf weist zwei Schenkel 58 auf, die nach innen ausgerichtet sind, um in Ausnehmungen an der Kokille 12b einzugreifen, in denen die Kanäle 86a, 86b vorgesehen sind. Die Wandungsstärke der Kokillen ist in diesem Bereich der Kanäle 86a, 86b relativ gering, um die Kanallänge gering zu halten, damit es hier zu keinen Verstopfungen kommen kann.

Wie zu erkennen ist, ist der Spritzkopf 14 relativ zu den Kanälen 86a, 86b mit seinen Düsen 56 nach oben versetzt, so daß die Düsen nach außen durch die Wandung bzw. die Fläche 60 der Kokille 12b verschlossen sind, während die Kanäle 86a, 86b durch einen Wandungsabschnitt 60 an dem Spritzkopf 14 verschlossen sind. Hierdurch wird ein Austreten von Kunststoff verhindert, insbesondere dann, wenn der Kunststoff mit einem Treibmittel angereichert ist.

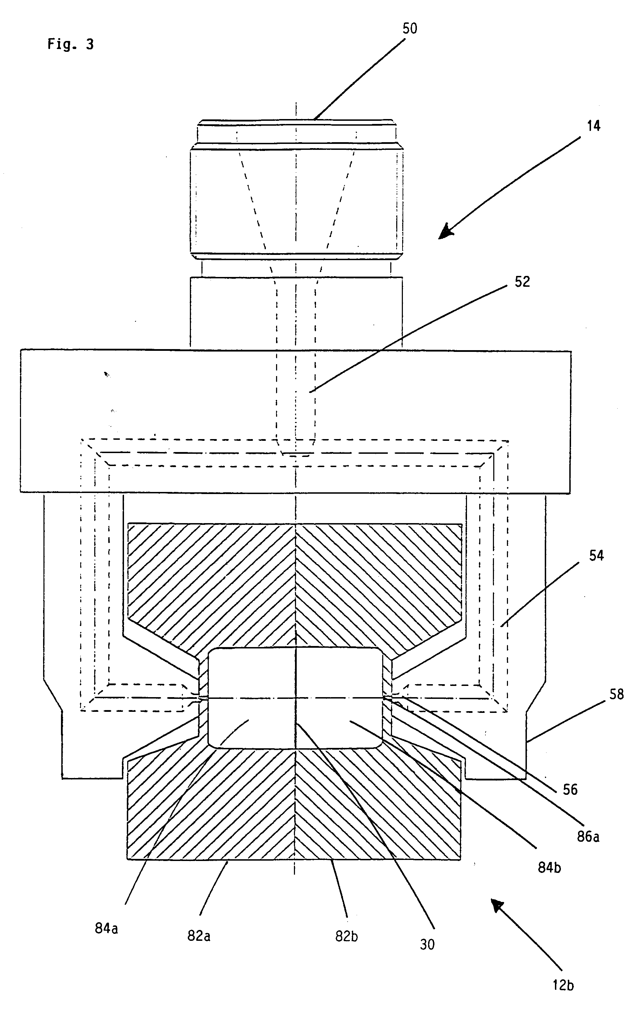

In Fig. 3 ist der Zustand dargestellt, in dem die Düsen 56 des Spritzkopfes 14 mit den Zuführkanälen 86a, 86b der geschlossenen Kokille 12b fluchten, so daß Kunststoffmaterial in die jeweiligen Kammern 84a, 84b, die durch die Folie 30 partitioniert sind, eingespritzt werden kann.

Natürlich kann auch die Kokille gegenüber dem Spritzkopf bewegt werden, was jedoch in der Regel nicht vorteilhaft sein wird, da die Kokillenhälften relativ starr in ihren Endlosketten geführt werden, wobei die Führung über Zahnungen an den jeweiligen Kokillenhälften vorgenommen werden kann.

In dem Fall, daß Kunststoff verarbeitet wird, der nicht mit Treibmitteln versetzt ist, können auch herkömmliche Verschlußmechanismen verwendet werden, da der Kunststoff, der nicht expandiert, dann nicht dazu neigt, aus vorhandenen Öffnungen herauszuquellen.

## Patentansprüche

1. Verfahren zur Herstellung von Spritzgußteilen, insbesondere Flaschenstöpseln (32), aus wenigstens einem thermoplastischen Kunststoff, vorzugsweise mit Treibmitteln, mit den folgenden Schritten:
a) wenigstens ein Kunststoffmaterial wird in wenigstens eine Spritzform (12b) eingeleitet, wobei
b) ein Träger, insbesondere eine Folie (30) bzw. ein Band, in die Spritzform (12b) eingesetzt wird,
**gekennzeichnet** durch die folgenden Merkmale:
c) wenigstens zwei Sätze von unterteilten Spritzformen (12a, 12b, 12c) werden endlos, bevorzugt diskontinuierlich, umgeführt, so daß in einem vorgegebenen Bereich von deren jeweiligen Umlaufbahnen wenigstens eine jeweilige unterteilte Spritzgußform eines Satzes mit einer jeweiligen unterteilten Spritzgußform eines anderen Satzes zu einer im wesentlichen geschlossenen Spritzgußform (12b) zusammengeführt wird, wobei
d) der Träger (30) zwischen die wenigstens eine sich schließenden bzw. geschlossene Spritzgußform (12b) bzw. Kokille im wesentlichen in Bewegungsrichtung der im wesentlichen geschlossenen Spritzgußform bzw. Kokille eingeführt wird.

2. Verfahren nach Anspruch 1, dadurch **gekennzeichnet**, daß die Spritzgußform(en) (12b) im wesentlichen hälftig geteilt sind und der eingeführte Träger, insbesondere Folie, die geschlossene Spritzgußform (12b) halbiert, bzw. daß wenigstens eine Düseneinrichtung (56), bevorzugt zwei Düseneinrichtungen, an die im wesentlichen geschlossene Spritzgußform (12b) angesetzt werden, um die Spritzgußform, in der der Träger, insbesondere die Folie bzw. das Band, abschnittweise aufgenommen ist, wenigstens teilweise mit Kunststoff zu füllen.

3. Verfahren nach Anspruch 2, dadurch **gekennzeichnet**, daß die Spritzdüse bzw. -düsen (56) relativ zu der bzw. den geschlossenen Spritzgußform(en) (56) bewegt werden, um die Düsenöffnungen von den den Spritzdüsen zugeordneten Anschlußöffnungen bzw. -kanälen (86a, 86b) der Spritzformen zu trennen, wobei bevorzugt die Spritzdüse bzw. -düsen (56) in von der Spritzgußform (12b) getrennten Zustand die Spritzgußform wenigstens im wesentlichen verschließen.

4. Verfahren nach einem der Ansprüche 1 bis 3, dadurch **gekennzeichnet**, daß die Spritzgußteile, bevorzugt Flaschenstöpsel, an dem Träger bzw. der Folie (30) gehalten aus den sich öffnenden Spritzgußformen (12c) ausgetragen werden, bzw. das Band bzw. die Folie (30) mit Schwächungsstellen versehen wird, um die Spritzgußteile leichter vom Band bzw. der Folie trennen zu können, bzw. die Spritzgußteile, insbesondere Flaschenstöpsel, aus dem Träger bzw. der Folie (30) gedrückt bzw. gestanzt werden.

5. Verfahren nach einem der Ansprüche 1 bis 4, dadurch **gekennzeichnet**, daß eine größere Anzahl von Spritzgußformen bzw. Kokillen zu einer Zeit geschlossen ist, und bevorzugt an mehrere geschlossene Spritzgußformen im wesentlichen gleichzeitig jeweilige Düsen bzw. Düsenblöcke bzw. Spritzköpfe angelegt werden, wobei bevorzugt Folien aus Metall und/oder Kunststoff vorzugsweise als Gasbarrieren eingeführt werden.

6. Vorrichtung zum Herstellen von Spritzgußteilen, insbesondere Flaschenstöpseln,
a) mit wenigstens einer Spritzform (12b) und
b) mit wenigstens einer Spritzdüse (56),
**gekennzeichnet** durch die folgenden Merkmale:
c) die wenigstens eine, vorzugsweise zwei Spritzdüsen (56) weisen jeweilige Dichtabschnitte (60) auf;
d) die Spritzdüse(n) (56) ist bzw. sind relativ zu der bzw. den Spritzformanschlußöffnung(en) oder -kanälen (86a, 86b) bewegbar, um die Spritzdüsen und/oder die Spritzformanschlußöffnungen oder -kanäle wenigstens im wesentlichen zu schließen.

7. Vorrichtung nach Anspruch 6, dadurch **gekennzeichnet**, daß die Spritzgußform und die Spritzdüse ebene Flächen (60, 88) aufweisen, so daß durch ein Parallelverschieben der Spritzgußdüse(n) bzw. des Spritzkopfes (14) zu der Spritzform (12b) diese und die Spritzdüse(n) im wesentlichen verschließbar sind.

8. Vorrichtung nach einem der Ansprüche 6 oder 7, dadurch **gekennzeichnet**, daß die Spritzgußform wenigstens zwei Teile (82a, 82b) aufweist, wobei wenigstens einer der Teile die Anschlußöffnung bzw. den Anschlußkanal aufweist.

9. Vorrichtung nach dem Oberbegriff des Anspruchs 6 bzw. den Ansprüchen 7 oder 8, dadurch **gekennzeichnet**, daß die Spritzform eine von mehreren einer Korrugatoreinrichtung (10) ist.

10. Vorrichtung nach einem der Ansprüche 6 bis 9, dadurch **gekennzeichnet**, daß vor der bzw. den Spritzgußformen, insbesondere denen, die im geschlossenen Zustand sind, eine Zuführeinrichtung (16) angeordnet ist, um ein Band bzw. eine Folie (30) zuzuführen.

11. Vorrichtung nach Anspruch 10 dadurch **gekennzeichnet**, daß eine Abführeinrichtung (18) vorgesehen ist, um das Band bzw. die Folie aufzunehmen, bzw. eine Auslöse- bzw. Ausstanzeinrichtung (20) zwischen der Korrugatoreinrichtung (10) und der Abführeinrichtung (18) angeordnet ist.

12. Vorrichtung nach einem der Ansprüche 9 bis 11, dadurch **gekennzeichnet**, daß die Spritzformhälften (12a, 12b, 12c) wenigstens im wesentlichen geschlossene Hohlräume bilden, wobei bevorzugt Endlosführungen der Korrugatoreinrichtung (10) entweder vollständig oder teilweise mit jeweiligen Spritzgußform- bzw. Kokillenhälften besetzt sind.
